Europäisches Patentamt

European Patent Office

Office européen des brevets

(11) Publication number: **0 094 174 B1**

(19)

(12) **EUROPEAN PATENT SPECIFICATION**

(45) Date of publication of patent specification: **04.09.91**　(51) Int. Cl.⁵: **G05B 19/407**

(21) Application number: **83302380.7**

(22) Date of filing: **27.04.83**

(54) Speed correcting device for use in speed command system.

(30) Priority: **28.04.82 JP 71824/82**

(43) Date of publication of application:
**16.11.83 Bulletin 83/46**

(45) Publication of the grant of the patent:
**04.09.91 Bulletin 91/36**

(84) Designated Contracting States:
**DE FR GB**

(56) References cited:
**EP-A- 0 020 024**
**EP-A- 0 044 967**

**W.Oppelt "Kleines Handbuch technischer Regelungen" edited in Verlag Chemie, Weinheim (FRG), 1972, pages 13-14; 36 and 695-697**

(73) Proprietor: **FANUC LTD.**
**3580, Shibokusa Aza-Komanba, Oshino-mura Minamitsuru-gun, Yamanashi 401-05(JP)**

(72) Inventor: **Yamazaki, Etuo**
**No. 566-93 Shimoongata-cho Hachioji-shi Tokyo 192-01(JP)**

(74) Representative: **Billington, Lawrence Emlyn et al**
**HASELTINE LAKE & CO Hazlitt House 28 Southampton Buildings Chancery Lane London WC2A 1AT(GB)**

## Description

The present invention relates to a speed correcting device for use in a speed command system for an apparatus having a movable machine part driven at a speed corresponding to a speed command value and, more particularly, to a speed correcting device which permits driving of the movable machine part at a speed accurately corresponding to the speed command value.

In a machine tool or the like, a movable machine part is driven at a speed corresponding to a speed command value fed from for example, a tracer controller, numerical controller or the like, but this method may be defective in that the driving speed of the movable machine part differs from the speed command value under the influence of an offset voltage which occurs in the speed command system owing to a secular change of an element used. To avoid this, it is a general practice in the prior art to provide a variable resistor for speed control in the speed command system and manipulate the variable resistor by an operator, thereby bringing the actual moving speed of the movable machine part into agreement with the speed command value. However this method not only increases the work of the operator but also lacks accuracy because of difficulties associated with the manual method of adjustment of the variable resistor.

Fig. 1 of US-A-4 099 113 discloses a numerical control servo system according to the precharacterising part of claim 1, in which iron plate is cut to preset lengths. It is essentially a displacement control system, in which displacement errors must be compensated by additional circuitry not required in the speed-control adaptation provided by the present invention. A correction value is put into a deviation memory before the servo control starts.

EP-A-0 044 967 describes a pure position control system wherein a position compensation circuit is activated when movement has stopped, the output of a reference position value/actual position value subtraction unit being stored as a compensation signal. Then the drive is moved to a corrected position.

According to the present invention there is provided a movable machine servo-control system comprising a speed control loop including a speed detector coupled to the movable machine and providing the actual value of the speed to a first adder arranged to supply a difference quantity between a speed command value and the feedback signal from the speed detector, which difference quantity commands the input of a speed control unit, and comprising a position feedback loop including a position detector, and a counter counting pulses from said position detector, and a second adder coupled to receive at a first input the speed command value, and at a second input a signal dependent on the content of the counter, and comprising an offset compensating circuit coupled to an input of the second adder, characterised in that the offset compensating circuit is realised by inserting an arithmetic circuit between the counter and the second input of said second adder, which, upon activation of the arithmetic circuit in a state of the speed command signal at the first input of the second adder being zero, or being cancelled by also being fed to the second input of the second adder, divides the content of the counter by a corresponding time interval, thus producing a compensating feedback signal which is fed to the second input of said second adder.

The speed command value may be fed from, for example, a numerical controller, tracer controller or the like.

An embodiment of the present invention may provide a speed correcting device which is free from the above-said defects of the prior art and permits driving of a movable machine part at a speed exactly corresponding to a speed command value.

An embodiment of the present invention may provide a speed correcting device which automatically brings the moving speed of a movable machine part to a speed command value.

An embodiment of the present invention may provide a speed correcting device with which one may achieve automatic correction of the moving speed of a movable machine part into agreement with a given speed command value even while the latter is being yielded at a value other than zero.

For a better understanding of the invention and to show how it may be put into effect reference will now be made, by way of example, to the accompanying drawings in which:

Figs. 1 to 4 are block diagrams illustrating embodiments of the present invention;

Fig. 5 is a block diagram illustrating specific arrangements of a counter 8, an arithmetic circuit 9, a signal generator 10 and an adder 1 in the embodiment of Fig. 1;

Fig. 6 is a flowchart explanatory of an operation of a microprocessor for obtaining a moving speed $\Delta v$ of a movable machine part; and

Figs. 7 and 8 are flowcharts explanatory of different examples of an operation of the microprocessor 30 for controlling a speed command value for the movable machine part.

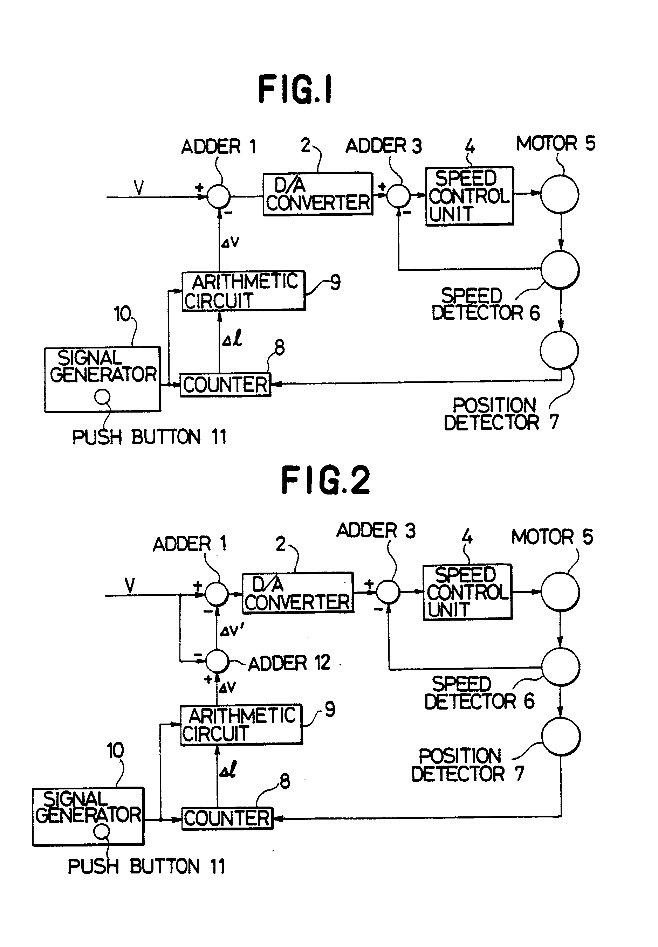

Fig. 1 illustrates in block form an embodiment of the present invention. In Fig. 1, reference numeral 1 indicates an adder; 2 designates a D/A converter; 3 identifies an adder; 4 denotes a speed control unit; 5 represents a motor; 6 shows a speed detector; 7 refers to a position detector; 8 signifies a counter; 9 indicates an arithmetic circuit; and 10 designates a signal generator which yields an output "1" for a certain period of time $\Delta t$ when a push button 11 is pressed. The adder 1 is supplied with a speed command value v (a digital quantity) from a tracer controller, numerical controller or the like (not shown); the D/A converter 2 applies the output of the adder 1 to the adder 3; and the speed control unit 4 drives the motor 5 on the basis of the output of the adder 3, i. e. a difference between the output of the D/A converter 2 and the detection result by the speed detector 6. Since such operations are already well-known, no detailed description will be given of them.

With the device shown in Fig. 1, the speed correcting operation starts with reducing the speed command value V to zero which is provided to the adder 1. At this time, if an offset voltage is present in the speed command system from the D/A converter 2 to the motor 5 owing to a secular change of an element used, the motor 5 is driven at a speed corresponding to the offset voltage in spite of the speed command value V being zero, and pulses corresponding to the amount of movement of a movable machine part (not shown) are applied from the position detector 7 to the counter 8.

The counter 8 counts the number of pulses which are applied thereto from the position detector 7 when the signal generator 10 yields an output "1" upon depression of the push button 11 by the operator. The count value of the counter 8 corresponds to the amount of movement $\Delta \ell$ of the movable machine part in the time $\Delta t$. Accordingly, the amount of movement $\Delta \ell$ of the movable machine part in the time interval $\Delta t$ can be obtained by depressing the push button 11 of the signal generator 10. When the output signal of the signal generator 10 goes to a "1", the arithmetic circuit 9 performs an operation of the following Eq. (1) on the basis of the amount of movement $\Delta \ell$ of the movable machine part applied from the counter 8 and the predetermined time $\Delta t$, by which operation the moving speed $\Delta v$ of the movable machine part at this time is calculated and is applied to the adder 1.

$$\Delta v = \Delta \ell \div \Delta t \qquad (1)$$

The moving speed $\Delta v$ thus obtained is generated by an offset voltage of the speed command system, so that by providing the speed $\Delta v$ as an amount of correction to the adder 1, the offset voltage is cancelled, reducing the moving speed of the movable machine part to zero. Accordingly, by correcting the speed command value V by the moving speed $\Delta v$, i. e. (V - $\Delta v$), the movable machine part moves at a speed corresponding to the speed command value V.

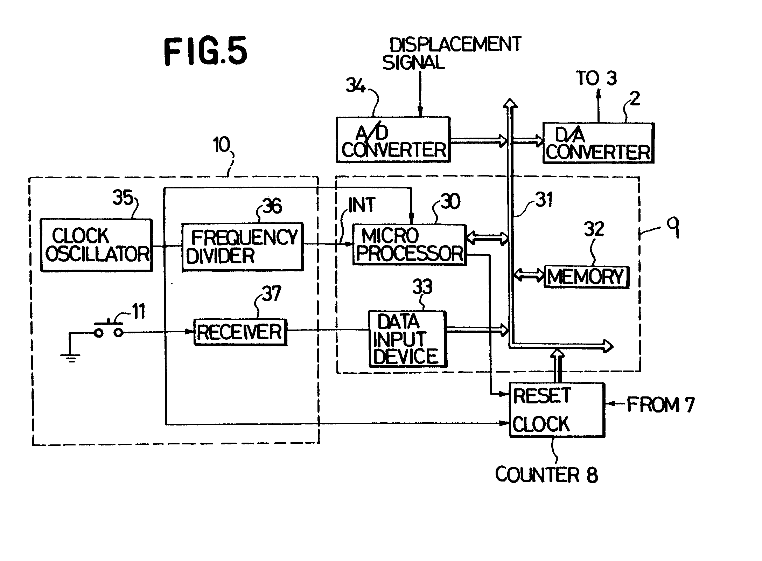

Fig. 5 is a block diagram illustrating, by way of example, specific arrangements of the counter 8, the arithmetic circuit 9, the signal generator 10 and the adder 1 used in the embodiment of Fig. 1. The parts corresponding to those in Fig. 1 are identified by the same reference numerals. Reference numeral 30 indicates a microprocessor; 31 designates its bus; 32 identifies a memory; 33 denotes a data input device; 34 represents an A/D converter; 35 shows a clock oscillator; 36 refers to a frequency divider; and 37 signifies a receiver. The microprocessor 30 is connected via the bus 31 to the memory 32, the A/D converter 34, the D/A converter 2, the counter 8 and the data input device 33. The microprocessor 30 operates in synchronism with output pulses of the clock oscillator 35 and sevices an interrupt by the output of the frequency divider 36 which frequency divides the output pulses of the clock oscillator 35.

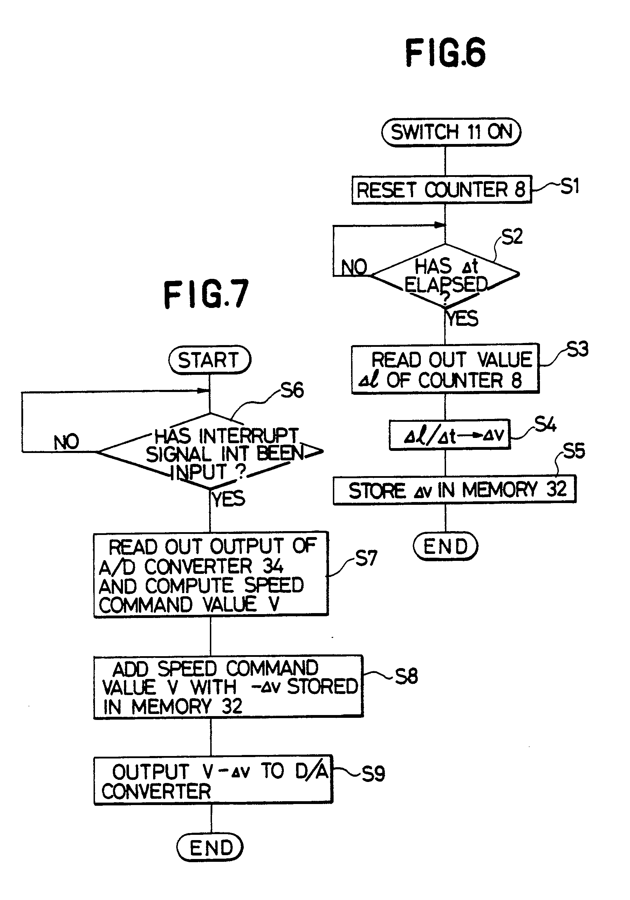

Fig. 6 is a flowchart explanatory of an operation of the microprocessor 30 for obtaining the moving speed $\Delta v$. Upon turning ON the switch 11, the microprocessor 30 resets the counter 8 (S1) and reads out the value of the counter 8 after the time $\Delta t$ has elapsed (S2, S3). Then the microprocessor 30 computes $\Delta L/\Delta t$ (S4) and stores the result $\Delta v$ in the memory 32 (S5).

Fig. 7 is a flowchart showing an example of an operation of the microprocessor 30 for controlling the speed command for the movable machine part. When supplied with an interrupt signal INT from the frequency divider 36, the microprocessor 30 reads out the output of the A/D converter 34 to which is applied a displacement signal of a tracer head in a tracer controller, and computes the speed command value V by a known method (S6, S7) and then adds the computed speed command value v with -$\Delta v$ stored in the memory 32 (S8). After this, the microprocessor 30 outputs the value V - $\Delta v$ to the D/A converter 2 (S9).

Fig. 2 illustrates in block form another embodiment of the present invention, which differs from the embodiment of Fig. 1 in that an adder 12 is provided for applying a difference between the speed command value V and the speed $\Delta v$ from the arithmetic circuit 9, i. e. ($\Delta v' = \Delta v - V$), to the adder 1. Incidentally, the same reference numerals are used as those in connection with Figs. 1 and 2, where the components are the same.

When the operator depresses the push button of the signal generator 10 during the application of a predetermined arbitrary speed command value V (including zero) from a tracer controller or numerical controller, the counter 8 and the arithmetic circuit 9 perform the same operations as described above. Consequently, the speed $\Delta v$ (the actual moving speed of the movable machine part) which is derived from the arithmetic circuit 9 at this time is the sum of the speed command value V and a speed $\Delta v_s$ caused by the offset voltage of the speed command system as indicated by the following Eq. (2):

$$\Delta v = V + \Delta v_s \qquad (2)$$

Since the adder 12 obtains the difference between the speed $\Delta v$ output from the arithmetic circuit 9 and the speed command value V as described above, the output $\Delta v'$ of the adder 12 is equal to the speed $\Delta v_s$ caused by the offset voltage. Therefore, the influence of the offset voltage of the speed command system can be removed by adding the output $\Delta v'$ of the adder 12 as an amount of correction to the adder 1, so that the movable machine part can be moved at a speed equal to the speed command value V. Incidentally, the arithmetic circuit 9 continues outputting the speed $\Delta v$ obtained as described above until the output of the signal generator 10 goes to a "1" again. In this way, this embodiment is capable of obtaining an amount of correction during application of an arbitrary speed command value, and hence it is simple in operation as compared with the embodiment of Fig. 1 which requires the reduction of the speed command value V to zero when obtaining the amount of correction.

The counter 8, the arithmetic circuit 9, the signal generator 10 and the adders 1 and 12 in Fig. 2 can also be realized through utilization of the circuit arrangements depicted in Fig. 5. Also it is possible to compute the moving speed $\Delta v$ in a similar manner.

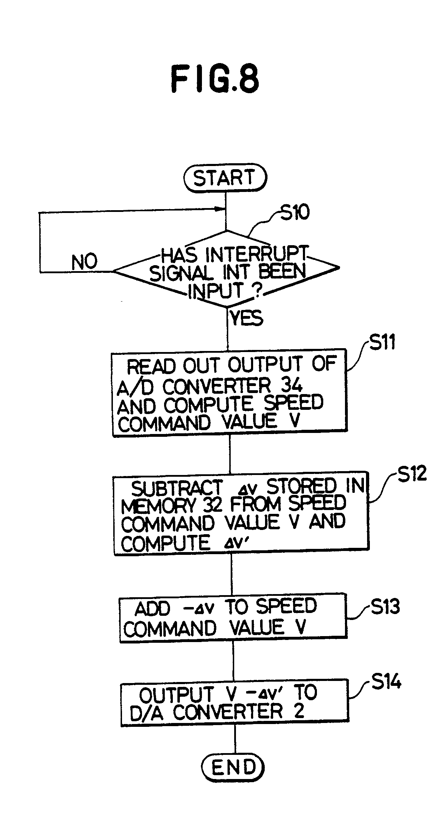

Fig. 8 is a flowchart explanatory of an example of an operation of the microprocessor 30 for controlling the speed command for the movable machine part in the case where the operation of the embodiment of Fig. 2 is placed under the control of the microprocessor 30. When supplied with the interrupt signal INT from the frequency divider 36, the microprocessor 30 reads out the output of the A/D converter 34 to which is applied the displacement signal of the tracer head, and computes the speed command value V in a known method (S10, S11) and then subtracts $\Delta v$ stored in the memory 32 from the speed command value V to obtain $\Delta v'$ (S12). After this, the microprocessor 30 adds $-\Delta v'$ to the speed command value V (S13) and outputs the result to the D/A converter 2 (S14).

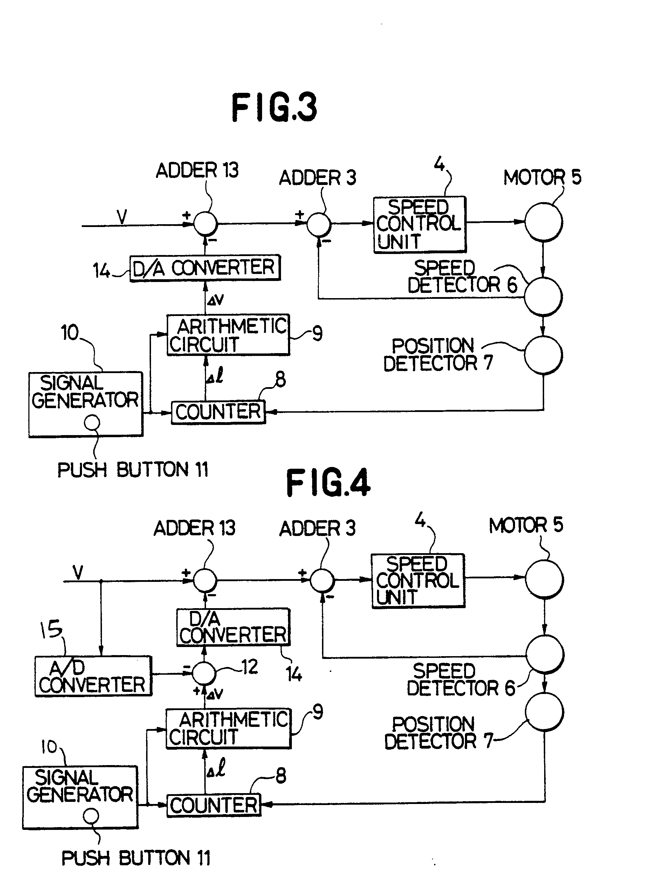

Fig. 3 illustrates in block form another embodiment of the present invention, which is a modified form of the embodiment of Fig. 1 and in which the speed command value V is provided in an analog form.

This embodiment differs from the embodiment of Fig. 1 in that the output of the arithmetic circuit 9 is applied via a D/A converter 14 to an adder 13 which carries out an addition of analog quantities. With such an arrangement, it is possible to eliminate the influence of the offset voltage as in the embodiment of Fig. 1 even if the speed command value V is given as an analog quantity. The same reference numerals are used as those in connection with Figs. 1 and 3, where the components are the same.

Fig. 4 illustrates in block form still another embodiment of the present invention, which is a modified form of the embodiment of Fig. 2 and in which the speed command value V is provided in an analog form.

This embodiment differs from the embodiment of Fig. 2 in that the speed command value V is applied via an A/D converter 15 to the adder 12 and in that the output of the adder 12 is applied via a D/A converter 14 to the adder 13 which performs an addition of analog quantities. With such an arrangement, it is possible to avoid the influence of the offset voltage as in the embodiment of Fig. 2 even if the speed command value V is given as an analog quantity. In Fig. 4, the same components as those in Fig. 2 are identified by the same reference numerals.

It will be apparent that many modifications and variations may be effected without departing from the scope of the novel concepts of the present invention.

## Claims

1. A movable machine (5) servo-control system comprising a speed control loop including a speed detector (6) coupled to the movable machine (5) and providing the actual value of the speed to a first adder (3) arranged to supply a difference quantity between a speed command value (V) and the feedback signal from the speed detector (6), which difference quantity commands the input of a speed control unit (4), and comprising a position feedback loop including a position detector (7) and a counter (8) counting pulses from said position detector (7), and a second adder (1,13) coupled to receive at a first input the speed command value (V), and at a second input a signal dependent on the content of the counter (8), and comprising an offset compensating circuit (8,9,10) coupled to an input of the second adder (1,13), characterised in that the offset compensating circuit is realised by inserting an arithmetic circuit (9) between the counter (8) and the second input of said second adder (1,13), which, upon activation of the arithmetic circuit (9) in a state of the speed command signal (V) at the first input of the second adder (1,13) being zero, or being cancelled by also being fed to the second input of the second adder (1,13), divides the content of the counter ($\Delta 1$) by a corresponding time interval ($\Delta t$), thus producing a compensating feedback signal ($\Delta V, \Delta V'$) which is fed to the second input of said second adder (1,13).

2. A servo-control system according to claim 1, and comprising another adder (12) arranged to receive the commanded speed value (V) and the divided quantity ($\Delta 1/\Delta t$) and to provide the difference therebetween as said feedback signal ($\Delta V'$) to the second input of the second adder (1,13), thus cancelling as aforesaid the speed command signal (V) at the first input of the second adder (1,13).

3. A servo-control system according to claim 1 or 2, wherein the divided quantity ($\Delta 1 / \Delta t$) is calculated for a time $\Delta t$ for which a manually operable device is actuated by an operator.

## Revendications

1. Un système d'asservissement pour une machine mobile (5), comprenant une boucle de commande de vitesse qui comporte un détecteur de vitesse (6) associé à la machine mobile (5) et fournissant la valeur réelle de la vitesse à un premier additionneur (3) qui est conçu pour fournir une grandeur égale à la différence entre une valeur d'ordre de vitesse (V) et le signal de rétroaction qui provient du détecteur de vitesse (6), cette différence commandant l'entrée d'une unité de commande de vitesse (4), et comprenant une boucle de rétroaction de position qui comporte un détecteur de position (7) et un compteur (8) qui compte des impulsions provenant du détecteur de position (7), et un second additionneur (1, 13) connecté de façon à recevoir sur une première entrée la valeur d'ordre de vitesse (V), et sur une seconde entrée un signal qui dépend du contenu du compteur (8), et comprenant un circuit de compensation de décalage (8, 9, 10), connecté à une entrée du second additionneur (1, 13), caractérisé en ce que le circuit de compensation de décalage est réalisé par l'insertion d'un circuit arithmétique (9) entre le compteur (8) et la seconde entrée du second additionneur (1, 13) et lorsque ce circuit arithmétique (9) est activé dans un état du signal d'ordre de vitesse (V) pour lequel le premier signal d'entrée du second additionneur (1, 13) est égal à zéro, ou est annulé par le fait qu'il est également appliqué à la seconde entrée du second additionneur (1, 13), il divise le contenu du comp-

teur ($\Delta \ell$) par un intervalle de temps correspondant ($\Delta t$), ce qui a pour effet de produire un signal de rétroaction de compensation ($\Delta V, \Delta V'$) qui est appliqué à la seconde entrée du second additionneur (1, 13).

2. Un système d'asservissement selon la revendication 1, comprenant un autre additionneur (12) qui est conçu pour recevoir la valeur d'ordre de vitesse (V) et la grandeur divisée ($\Delta \ell/\Delta t$), et pour appliquer leur différence à la seconde entrée du second additionneur (1, 13), pour le signal de rétroaction précité ($\Delta V'$), ce qui a pour effet d'annuler, comme indiqué précédemment, le signal d'ordre de vitesse (V) qui est présent sur la première entrée du second additionneur (1, 13).

3. Un système d'asservissement selon la revendication 1 ou 2, dans lequel la grandeur divisée ($\Delta \ell/\Delta t$) est calculée pour un intervalle de temps $\Delta t$ pendant lequel un dispositif pouvant être actionné manuellement est actionné par un opérateur.

## Patentansprüche

1. Servo-Regelsystem für ein bewegbares Maschinenteil (5), welches Regelsystem eine Geschwindigkeits-Regelschleife umfaßt, die einen Geschwindigkeits-Detektor (6) enthält, der mit dem bewegbaren Maschinenteil (5) verbunden ist und den Istwert der Geschwindigkeit einem ersten Addierer (3) zuführt, der vorgesehen ist, um eine Differenzgröße zwischen einem Geschwindigkeits-Sollwert (V) und dem Rückkopplungssignal aus dem Geschwindigkeits-Detektor (6) zu erzeugen, welche Differenzgröße eine Anweisung an den Eingang einer Geschwindigkeits-Regeleinheit (4) darstellt, wobei das Regelsystem eine Positions-Rückkopplungsschleife umfaßt, die einen Positions-Detektor (7) und einen Zähler (8), der Impulse von dem Positions-Detektor (7) abzählt, sowie einen zweiten Addierer (1, 13) enthält, der angeschlossen ist, um an einem ersten Eingang den Geschwindigkeits-Sollwert (V) und an einem zweiten Eingang ein Signal abhängig von dem Inhalt des Zählers (8) aufzunehmen, und wobei das Regelsystem eine Abweichungs-Kompensationsschaltung (8, 9, 10) umfaßt, die mit einem Eingang des zweiten Addierers (1, 13) verbunden ist, dadurch **gekennzeichnet**, daß die Abweichungs-Kompensationsschaltung durch Einfügen einer arithmetischen Schaltung (9) zwischen den Zähler (8) und den zweiten Eingang des zweiten Addierers (1, 13) verwirklicht ist, der auf die Aktivierung der arithmetischen Schaltung (9) hin in einem Zustand des Geschwindigkeits-Sollwertsignals (V) an dem ersten Eingang des zweiten Addierers (1, 13), Null ist oder der durch ein Zuführen auch zu dem zweiten Eingang des zweiten Addierers (1, 13) unwirksam gemacht ist, den Inhalt des Zählers (Δ1) durch ein korrespondierendes Zeitintervall (Δt) dividiert, um auf diese Weise ein Kompensations-Rückkopplungssignal (Δv, Δv') zu erzeugen, das dem zweiten Eingang des zweiten Addierers (1, 13) zugeführt wird.

2. Servo-Regelsystem nach Anspruch 1, das einen weiteren Addierer (12) enthält, der vorgesehen ist, um den Geschwindigkeits-Sollwert (V) und die dividierte Größe (Δ1/Δt) aufzunehmen und die Differenz zwischen diesen als das Rückkopplungssignal (ΔV') an dem zweiten Eingang des zweiten Addierers (1, 13) bereitzustellen, auf welche Weise das Geschwindigkeits-Sollwertsignal (V) an dem ersten Eingang des zweiten Addierers (1, 13) wie zuvor angegeben unwirksam gemacht wird.

3. Servo-Regelsystem nach Anspruch 1 oder 2, bei dem die dividierte Größe (Δ1/Δt) für eine Zeit Δt berechnet wird, für die eine von Hand betätigbare Einrichtung durch eine Bedienungsperson betätigt wird.

# FIG.1

# FIG.2

# FIG.3

# FIG.4

# FIG.5

FIG.5

DISPLACEMENT SIGNAL

34 — A/D CONVERTER

TO 3

2 — D/A CONVERTER

10

35 — CLOCK OSCILLATOR

36 — FREQUENCY DIVIDER

INT

30 — MICRO PROCESSOR

31

32 — MEMORY

9

11

37 — RECEIVER

33 — DATA INPUT DEVICE

RESET CLOCK

FROM 7

COUNTER 8

# FIG.6

( SWITCH 11 ON )

| RESET COUNTER 8 |~S1

S2

NO — HAS Δt ELAPSED ?

YES

| READ OUT VALUE Δl OF COUNTER 8 |~S3

| Δl/Δt→Δv |~S4

S5

| STORE Δv IN MEMORY 32 |

( END )

# FIG.7

( START )

S6

NO — HAS INTERRUPT SIGNAL INT BEEN INPUT ?

YES

| READ OUT OUTPUT OF A/D CONVERTER 34 AND COMPUTE SPEED COMMAND VALUE V |~S7

| ADD SPEED COMMAND VALUE V WITH −Δv STORED IN MEMORY 32 |~S8

| OUTPUT V−Δv TO D/A CONVERTER |~S9

( END )

# FIG.8

START

S10

HAS INTERRUPT
SIGNAL INT BEEN
INPUT ?

NO

YES

READ OUT OUTPUT OF
A/D CONVERTER 34
AND COMPUTE SPEED
COMMAND VALUE V

S11

SUBTRACT Δv STORED IN
MEMORY 32 FROM SPEED
COMMAND VALUE V AND
COMPUTE Δv'

S12

ADD −Δv TO SPEED
COMMAND VALUE V

S13

OUTPUT V −Δv' TO
D/A CONVERTER 2

S14

END